# EUROPEAN PATENT APPLICATION

(11) **EP 2 060 368 A1**
(43) Date of publication of application: **20.05.2009**
(21) Application number: 08017577.1
(22) Date of filing: 07.10.2008
(51) Int. Cl.: B25J 15/02

(54) **Holding apparatus and holding unit with a fixed and two movable holding members**

(30) Priority: 16.11.2007 JP 2007298293
(71) Applicant: Fanuc Ltd, Yamanashi 401-0597 (JP)
(72) Inventor: Hariki, Kazuo, Minamitsuru-gun Yamanashi 401-0597 (JP); Oda, Masaru, Minamitsuru-gun Yamanashi 401-0597 (JP); Ochiishi, Yoshinori, Minamitsuru-gun Yamanashi 401-0597 (JP)
(74) Representative: Thum, Bernhard

(57) **Abstract**

A holding apparatus and a holding unit are disclosed. The holding apparatus (4) includes a base plate (21), a fixed holding member (22) fixed on the base plate, a first movable holding member (11) arranged in opposed relation to and having a face adapted to operate in collaboration with the fixed holding member for holding a workpiece, a second movable holding member (12) adapted to operate in collaboration with said face of said first movable holding member in operatively interlocked relationship therewith for holding a workpiece, and a drive device (19) for driving the first movable holding member and the second movable holding member in operatively interlocked relationship with each other. Therefore, holding power can be increased easily without a large space. The holding apparatus may further include a removing device (24,25,26) for removing the second movable holding member from between the first movable holding member and the fixed holding member when holding the workpiece (20) with the first movable holding member and the fixed holding member.

## Description

### BACKGROUND OF THE INVENTION

### 1. Field of the Invention

This invention relates to a holding apparatus and a holding unit for holding a workpiece, and in particular to a holding apparatus and a holding unit arranged at the forward end of the arm of a robot

### 2. Description of the Related Art

In the prior art, a robot hand arranged on the wrist of a robot holds a workpiece thereby to transport and set the workpiece in position. Such a hand is varied in shape, etc., according to the workpiece. Japanese Unexamined Patent Publication No. 8-285748 discloses a holding apparatus as a robot hand having a pair of grabbing teeth. The holding apparatus disclosed in Japanese Unexamined Patent Publication No. 8-285748 is connected to a hydraulic chamber, and the holding power of the holding apparatus is adjusted in accordance with the magnitude of the pressure of oil introduced into the hydraulic chamber.

However, the holding power cannot be increased beyond a certain limit only by increasing the oil pressure. In order to increase the holding power considerably, the current hydraulic chamber is required to be switched to a larger hydraulic chamber. In such a case, plural hydraulic chambers and a switching mechanism are required, which requires a very large space. Further, production cost of the holding apparatus is uneconomically increased.

The present invention has been achieved in view of this situation, and the object thereof is to provide an inexpensive holding apparatus in which the holding power can be easily increased without addition of space.

### SUMMARY OF THE INVENTION

In order to achieve the aforementioned object of the invention, according to a first aspect of the invention, there is provided a holding apparatus comprising a base plate, a fixed holding member fixed on the base plate, a first movable holding member arranged in opposed relation to the fixed holding member and adapted to operate in collaboration with the fixed holding member, a second movable holding member adapted to operate in collaboration with the first movable holding member in operatively interlocked relation with the first movable holding member, and a drive means for driving the first movable holding member and the second movable holding member in operatively interlocked relationship with each other, wherein both the second movable holding member and the fixed holding member face one side of the first movable holding member.

According to a second aspect of the invention, there is provided a holding apparatus as in the first aspect, wherein the holding apparatus is mounted on the robot arm.

According to a third aspect of the invention, there is provided a holding apparatus as in the first or second aspect, wherein the fixed holding member is arranged at a position not interfering with the second movable holding member, and the first movable holding member includes a first holding member portion operated in collaboration with the fixed holding member and a second holding member portion operated in collaboration with the second movable holding member.

According to a fourth aspect of the invention, there is provided a holding apparatus as in any one of the first to third aspects, further comprising a removing means for removing the second movable holding member from between the first movable holding member and the fixed holding member when holding the workpiece with the first movable holding member and the fixed holding member.

According to a fifth aspect of the invention, there is provided a holding unit comprising a body base having a fixed holding member, a slider arranged slidably with respect to the body base and a holding apparatus mounted on the slider, wherein the holding apparatus includes a base plate, a first movable holding member arranged in opposed relation to the fixed holding member and adapted to operate in collaboration with the fixed holding member, a second movable holding member adapted to operate in collaboration with the first movable holding member in operatively interlocked relationship with the first movable holding member, and a drive means for driving the first movable holding member and the second movable holding member in operatively interlocked relationship with each other, wherein both the second movable holding member and the fixed holding member face one side of the first movable holding member, the holding unit further comprising a first fixing means for fixing the base plate on the body base and a second fixing means for fixing the second movable holding member on the body base.

According to a sixth aspect of the invention, there is provided a holding apparatus as in the fifth aspect, wherein the holding apparatus is mounted on the robot arm, wherein a robot control unit for controlling the robot controls the drive means, the first fixing means and the second fixing means.

The above and other objects, features and advantages will be made more apparent by the detailed description of typical embodiments taken in conjunction with the accompanying drawings.

### BRIEF DESCRIPTION OF THE DRAWINGS

Fig. 1 is a diagram showing a robot system having a holding apparatus or a holding unit according to the invention.
Fig. 2 is a perspective view of the holding apparatus according to a first embodiment of the invention.
Fig. 3 is a perspective view of the holding apparatus according to a second embodiment of the invention.
Fig. 4 is a flowchart showing the operation of the holding apparatus according to the second embodiment of the invention.
Fig. 5a is a front view of the holding apparatus shown in Fig. 3.
Fig. 5b is a another front view of the holding apparatus.
Fig. 6a is a first diagram explaining the operation of the holding apparatus using a link mechanism according to this invention.
Fig. 6b is a second diagram explaining the operation of the holding apparatus using a link mechanism according to this invention.
Fig. 6c is a third diagram explaining the operation of the holding apparatus using a link mechanism according to this invention.
Fig. 7 is a perspective view of the holding unit according to the invention.
Fig. 8 is a partial side view of the holding unit shown in Fig. 7.
Fig. 9 is a flowchart showing the operation of the holding unit according to the invention.
Fig. 10a is a first rear view of the holding unit.
Fig. 10b is a second rear view of the holding unit.
Fig. 11a is a third rear view of the holding unit.
Fig. 11b is a fourth rear view of the holding unit.

### DETAILED DESCRIPTION

The embodiments of the invention are explained below with reference to the accompanying drawings. In the drawings, similar members are designated by similar reference numerals, respectively. To facilitate understanding, the drawings have been reduced in scale as required.

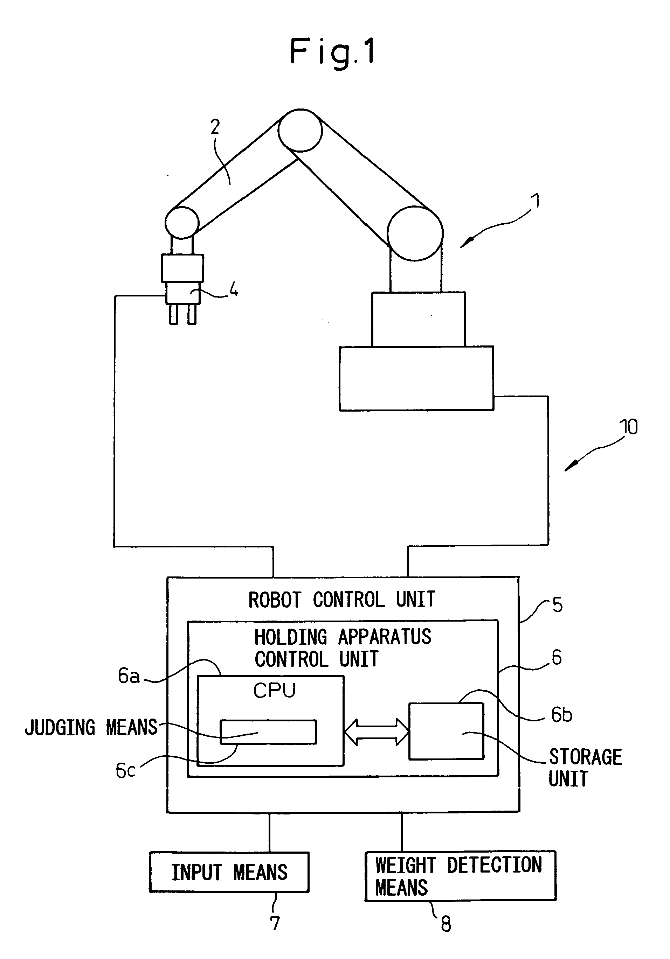

Fig. 1 is a diagram showing a robot system having the holding apparatus according to this invention. The robot system 10 shown in Fig. 1 includes a robot 1 and a robot control unit 5 as main parts. The robot 1 is a vertical multi-joint robot having six axes. A holding apparatus 4 is mounted as a hand at the forward end of the robot arm 2 of the robot 1. In this configuration, the holding apparatus 4 can be moved to various places to hold the workpiece by moving the arm 2.

The robot 1 and the holding apparatus 4 are connected to the robot control unit 5 for controlling the operation of the entire robot 1. Further, the robot control unit 5 includes a holding apparatus control unit 6 for controlling the operation of the component elements of the holding apparatus 4 or the holding unit 40 described later.

The holding apparatus control unit 6 is a digital computer including a CPU 6a and a storage unit 6b as main parts. The CPU 6a has the function as a judging means 6c to judge whether the weight W of the workpiece 20 is larger than a threshold value W0 or not. Furthermore, the storage unit 6b stores the operation programs 100, 200 and the threshold value W0 described later.

Furthermore, as shown, the robot control unit 5 is connected to an input means 7 such as a keyboard. Further, the robot control unit 5 is connected to a weight detection means 8 for detecting the weight of the workpiece 20.

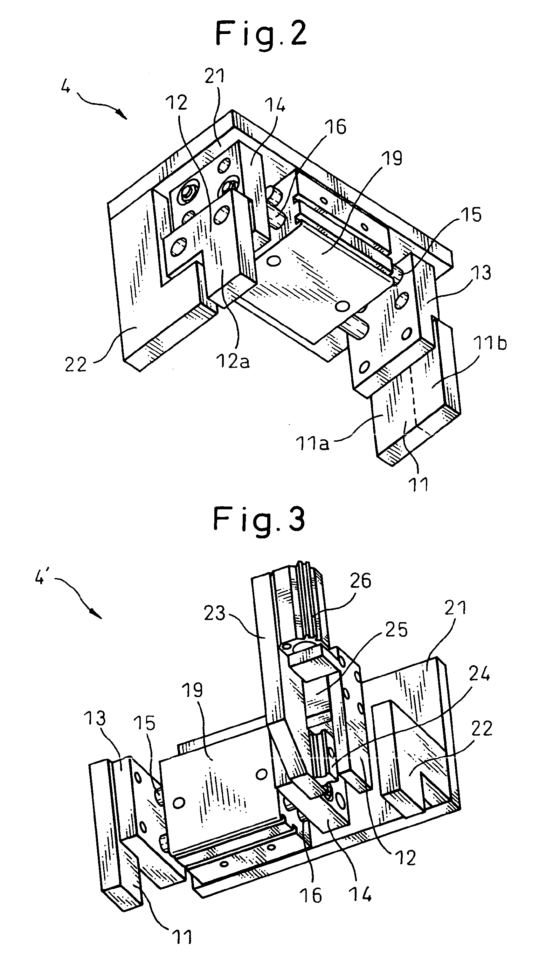

Fig. 2 is a perspective view of the holding apparatus according to a first embodiment of the invention. The holding apparatus 4 shown in Fig. 2 includes a base plate 21 mounted at the forward end (not shown) of the arm 2 of the robot 1. A block 19 is mounted on the surface of the base plate 21. The block 19 is formed of plural cylindrical paths (not shown) extending substantially parallel to the surface of the base plate 21 to the two ends of the block 19.

The rods 15, 16 inserted in these cylindrical paths extend in opposite directions from the two ends of the block 19. Movable blocks 13, 14 are mounted at the forward ends of the rods 15, 16, respectively. Further, a plate-like first movable hook member 11 and a plate-like second movable hook member 12 are mounted on the movable blocks 13, 14, respectively.

As shown, the first movable hook member 11 is rectangular, while the second movable hook member 12 is substantially in the shape of L. The second movable hook member 12 includes a narrow portion 12a about one half as wide as the first movable hook member 11 and extending away from the block 19. As can be seen from Fig. 2, the length of the second movable hook member 12 including the narrow portion 12a is substantially equal to the length of the first movable hook member 11.

The block 19 includes a mechanism for driving the rods 15, 16 at the same time under the air or oil pressure. This mechanism retreats the rods 15, 16 into the cylindrical paths at the same time or project them from the cylindrical paths at the same time. With this configuration, according to this invention described herein, the block 19 is referred to as a drive cylinder 19. The collaborative operation of the rods 15, 16 makes it possible for the first movable hook member 11 and the second movable hook member 12 to hold the workpiece (not shown in Fig. 2).

Further, in Fig. 2, a substantially L-shaped fixed hook member 22 is fixed at the end of the base plate 21. The fixed hook member 22 is arranged in opposed relation to the first movable hook member 11. As can be seen from Fig. 2, the fixed hook member 22 and the second movable hook member 12 face one side of the first movable hook member 11.

As shown in Fig. 2, the fixed hook member 22 is geometrically complementary with the second movable hook member 11. Therefore, even in the case where the rod 16 is projected from the drive cylinder 19, the fixed hook member 22 is prevented from colliding with the second movable hook member 12.

Fig. 3 is a perspective view of the holding apparatus 4' according to a second embodiment of the invention. In the second embodiment shown in Fig. 3, a plate 23 adapted to extend in the direction at right angles to the direction in which the rods 15, 16 are extended and contracted (the direction in which the workpiece is held) is mounted on a movable block 14.

As shown, a rail 24 adapted to extend in the direction at right angles to the direction in which the rods 15, 16 are extended or contracted is mounted on the plate 23. A slider 25 slidably engages with the rail 24. Further, the second movable hook member 12 is mounted on the slider 25. Furthermore, a cylinder 26 driven under air or oil pressure is arranged on the plate 23. The slider 25 is adapted to slide integrally with the second movable hook member 12 on the rail 24 by the cylinder 26.

The slider 25 can slide between a first position where the forward end of the second movable hook member 12 is flush with the forward end of the first movable hook member 11 and a second position where the forward end of the second movable hook member 12 is away from the base end of the first movable hook member 11. Therefore, the second movable hook member 12, once moved to the second position, disappears from the space between the first movable hook member 11 and the fixed hook member 22. Specifically, the rail 24, the slider 25 and the cylinder 26 function as a removing means for removing the second movable hook member 12 from the space between the first movable hook member 11 and the fixed hook member 22.

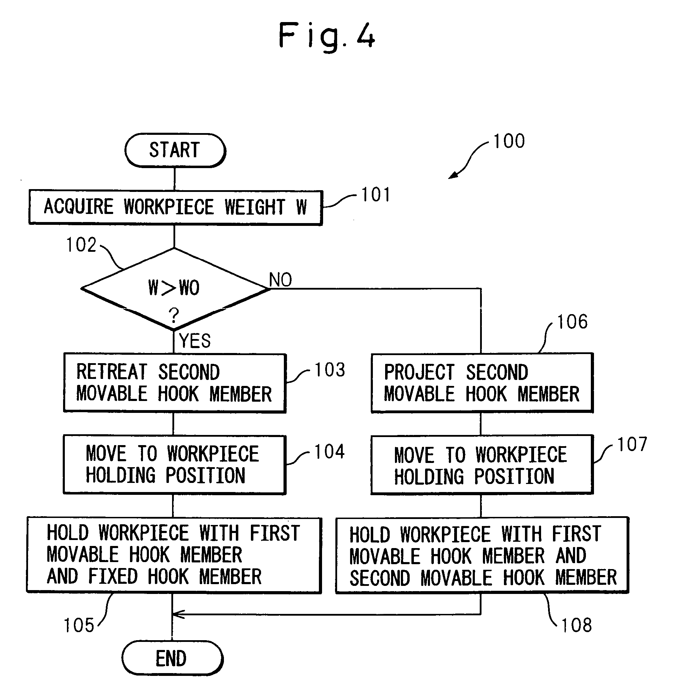

Fig. 4 is a flowchart showing the operation of the holding apparatus according to the second embodiment of the invention. The operation program 100 shown in Fig. 4 is stored in the storage unit 6b of the holding apparatus control unit 6. With reference to Fig. 4, the operation of the holding apparatus according to the second embodiment of the invention is explained.

First, the operator inputs the weight W of the workpiece to be held, into the holding apparatus control unit 6 using the input means 7. In step 101 of the operation program 100, the input weight W of the workpiece 20 is acquired. As an alternative, the weight W of the workpiece 20 is detected by a weight detection means 8 of the robot control unit 5 and the detection value thereof is acquired.

Then, in step 102, the judging means 6c of the holding apparatus control unit 6 judges whether the weight W of the workpiece 20 is larger than a predetermined threshold value W0 or not. In the case where the weight W is larger than the threshold value W0, the process proceeds to step 103, while in the case where the weight W is not larger than the threshold value W0, the process proceeds to step 106.

In step 106, the slider 25 is slid by the cylinder 26 thereby to project the second movable hook member 12 to the first position. As a result, the forward end of the second movable hook member 12 becomes substantially flush with the forward end of the first movable hook member 11.

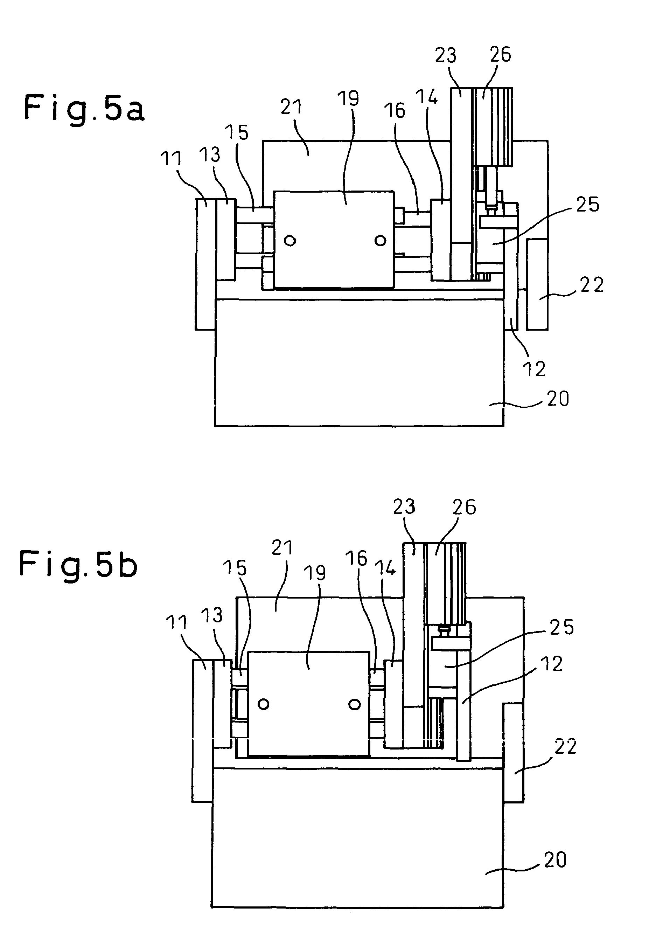

Then, the entire holding apparatus 4' is moved to the position for holding the workpiece 20 by the robot 1 (step 107). Fig. 5a is a front view of the holding apparatus shown in Fig. 3. Once the holding apparatus 4' moves to the holding position, as shown in Fig. 5a, the workpiece 20 comes to be positioned between the first movable hook member 11 and the second movable hook member 12.

After that, the rods 15, 16 are retreated at the same time by driving the drive cylinder 19. As a result, the workpiece 20 comes to be held by the first movable hook member 11 and the second movable hook member 12 (step 108).

On the contrary, upon judgment that the weight W is larger than the threshold value W0, the slider 25 is slid by the cylinder 26 in step 103, so that the second movable hook member 12 is retreated to the second position. As a result, the forward end of the second movable hook member 12 comes to be located inside the forward end of the first movable hook member 11 and the fixed hook member 22.

Then, the entire holding apparatus 4' is moved to the position for holding the workpiece 20 (step 107). As a result, as shown in another front view of the holding apparatus in Fig. 5, the workpiece 20 comes to assume the position between the first movable hook member 11 and the fixed hook member 22.

After that, the rods 15, 16 are retreated at the same time by driving the drive cylinder 19. Thus, the workpiece 20 is held by the first movable hook member 11 and the fixed hook member 22 (step 105). It should be noted that the second movable hook member 12 is also moved in as operatively interlocked relationship with the first movable hook member 11 even in the case where the workpiece 20 is held by the first movable hook member 11 and the fixed hook member 22.

As described above, according to the second embodiment, the second movable hook member 12 can be retreated in the direction at right angles to the holding direction. As a result, the second movable hook member 12 and the workpiece 20 are prevented from interfering with each other when the workpiece 20 is held by the first movable hook member 11 and the fixed hook member 22.

In this connection, according to the first embodiment (Fig. 2) in which the second movable hook member 12 is mounted directly on the movable block 14, a similar process to the process explained with reference to Fig. 4 is executed except that the second movable hook member 12 is neither retreated nor projected. Therefore, the detailed operation of the holding apparatus 4 according to the first embodiment is not explained.

Referring to Fig. 2 again, the first movable hook member 11 according to the first embodiment includes a first hook member portion 11a directly facing the fixed hook member 22 and a second hook member portion 11b directly facing the second movable hook member 12. When the workpiece 20 is held between the first movable hook member 11 and the second movable hook member 12, the first hook member portion 11a is used, while the second hook member portion 11b is used when the workpiece 20 is held between the first movable hook member 11 and the fixed hook member 22.

For this reason, the area of the first movable hook member 11 is larger than the area of the narrow portion 12a of the second movable hook member 12 and the area of the fixed hook potion 22. This configuration makes it possible to secure a sufficiently large size of the first hook member portion 11a and the second movable hook member portion 11b to hold the workpiece 20. Preferably, the area of the first movable hook member 11 is substantially equal to the total area of the narrow portion 12a of the second movable hook member 12 and the fixed hook member 22.

On the contrary, in the second embodiment shown in Fig. 3, the area of the first movable hook member 11 is substantially equal to each of the area of the second movable hook member 12 and the area of the fixed hook member 22. Further, in the case where the workpiece 20 is held by the first movable hook member 11 and the second movable hook member 12, the second movable hook member 12 may be located between the first movable hook member 11 and the fixed hook member 22.

With this configuration, when the rod 16 of the second movable hook member 12 is extended, there is a possibly that the fixed hook member 22 interferes with the second movable hook member 12. Therefore, in the second embodiment, the drive cylinder 19 is mounted in the neighborhood of the end portion of the base plate 21 located on the side thereof far from the end thereof where the fixed hook member 22 is fixed. As a result, a sufficient stroke for the rod 16 of the second movable hook member 12 can be secured, thereby reducing the possibility of the fixed hook member 22 interfering with the second movable hook member 12. Therefore, it is preferable that the base plate 21 according to the second embodiment is longer than the base plate 21 according to the first embodiment in the direction in which the workpiece 20 is held.

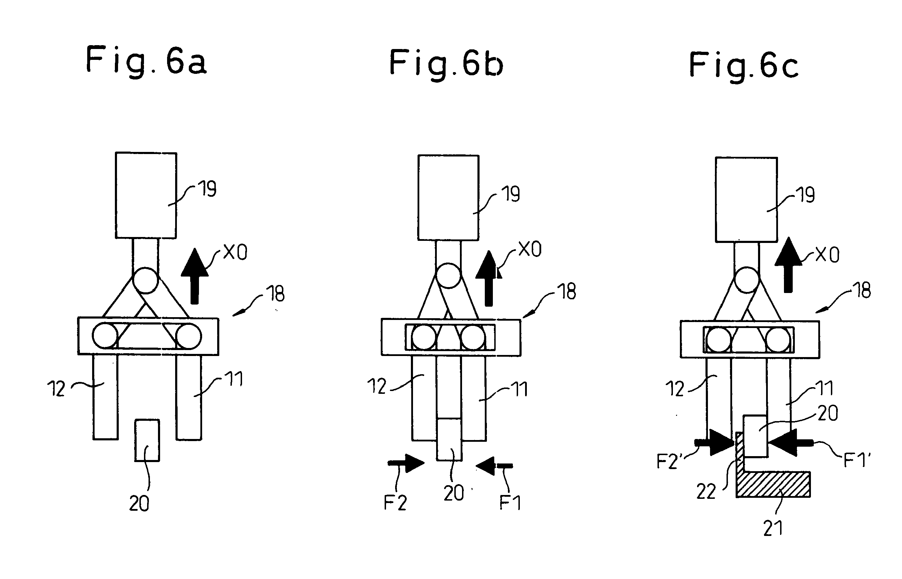

According to this invention, the holding power P2 with which the workpiece 20 is held by the first movable hook member 11 and the fixed hook member 22 is larger than the holding power P1 with which the workpiece 20 is held by the first movable hook member 11 and the second movable hook member 12. This is explained with reference to the schematic diagrams of Figs. 6a to 6c. In Figs. 6a to 6c, the link mechanism 18 is shown in place of the rods 15, 16 to facilitate the understanding.

Figs. 6a and 6b are schematic diagrams showing the first embodiment. When the drive cylinder 19 is driven in the direction of arrow X0 at the initial position indicated in Fig. 6a, the first movable hook member 11 and the second movable hook member 12 move inward in collaboration with each other through the link mechanism 18 as shown in Fig. 6b. As a result, the workpiece 20 can be held between the first movable hook member 11 and the second movable hook member 12.

The forces F1 and F2 generated by the first movable hook member 11 and the second movable hook member 12 are equal to each other. The pressure or pressing force applied by each of the forces F1 and F2 is designated as a. In the first embodiment, the holding power P1 for holding the workpiece 20 is equal to the total (P1 = F1 + F2 = 2a) of the respective pressure a of the first movable hook member 11 and the second movable hook member 12.

On the contrary, Fig. 6c is a schematic diagram showing the second embodiment. In Fig. 6c, the workpiece 20 is held between the first movable hook member 11 and the fixed hook member 22, and the second movable hook member 12 is out of contact with the workpiece 20. Therefore, the load of the workpiece 20, is not imposed on the second movable hook member 12. Thus, the entire force generated by the drive cylinder 19 acts on the first movable hook member 11. In other words, according to the second embodiment, the total pressure 2a in the first embodiment described above acts on the first movable hook member 11 as a pressure F1'.

In addition, from the fixed hook member 22 the force F2' which is a reaction force of the pressure F1' is applied. The magnitude of this force F2' is equal to that of the force F1'. Therefore, the holding power P2 in the second embodiment to hold the workpiece 20 is equivalent to the total (P2 = F1' + F2' = 4a) of the pressure F1' from the first movable hook member 11 and the force F2' from the fixed hook member 22.

Therefore, theoretically, the holding power P2 to hold the workpiece 20 with the first movable hook member 11 and the fixed hook member 22 is twice as large as the holding power P1 for holding the workpiece 20 with the first movable hook member 11 and the second movable hook member 12. In one embodiment in which the diameter of the rods 15, 16 is 20 mm and the air pressure applied to the drive cylinder 19 is 0.5 MPa, the holding power P1 is 82.5 N and the holding power P2 143.3 N. In other words, according to this embodiment, the holding power P2 about 1.74 times larger than the holding power P1 can be obtained.

As described above, according to this invention, the first movable hook member 11 and the second movable hook member 12 are used in the case where a comparatively small holding power P1 is sufficient, while the first movable hook member 11 and the fixed hook member 22 are used in the case where a comparatively large holding power P2 is required.

According to this invention, the common drive cylinder 19 can be used even in the case where the aforementioned different sets of the hook members are employed. Therefore, this invention, can easily increase the holding power without any large space. It will also be understood that an inexpensive holding apparatus is provided, since neither plural hydraulic chambers nor a switching mechanism is required unlike in the prior art.

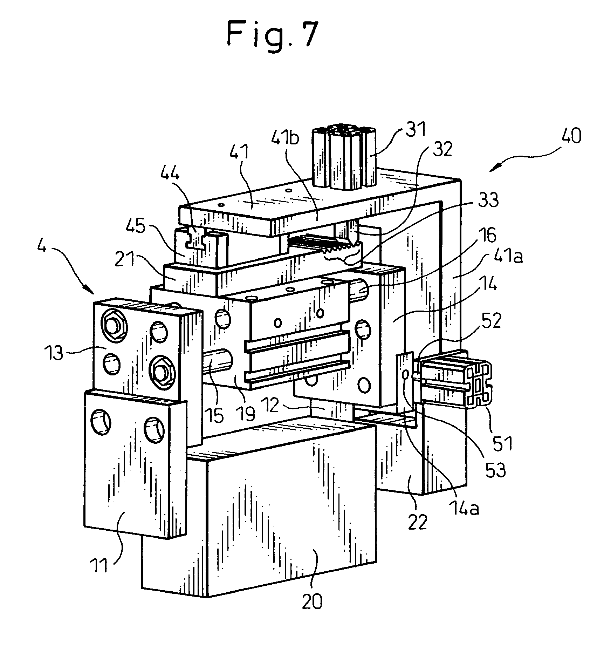

Fig. 7 is a perspective view of the holding unit according to this invention. The holding unit 40 shown in Fig. 7 can be mounted at the forward end of the arm 2 of the robot 1 in place of the holding apparatus 4 (refer to Fig. 1). As shown in Fig. 7, a substantially L-shaped body base 41 includes two extensions 41a, 41b. The fixed hook member 22 is integrally formed with the forward end of the extension 41a.

As shown in Fig. 7, a rail 44 is laid on the inner surface of the other extension 41b. A slider 45 adapted to slidably engage the rail 44 is mounted on the upper surface of the base plate 21. Further, a first cylinder 31 is mounted on the outer surface of the extension 41b. The first rod 32 can be advanced toward the base plate 21 or retreated from the base plate 21 by the air or oil pressure applied to the first cylinder 31.

As can be seen from Fig. 7, the slider 45 is mounted in the neighborhood of the end of the base plate 21. The remaining part of the upper surface of the base plate 21 is formed with plural engaging grooves 33 at right angle to the sliding direction. These engaging grooves 33 are each adapted to engage the first rod 32 of the first cylinder 31. By this engaging operation, the base plate 21 can be fixed on the body base 41. Specifically, the first cylinder 31, the first rod 32 and the engaging grooves 33 function as first fixing means for fixing the holding apparatus 4 on the body base 41. Incidentally, the holding apparatus 4 shown in Fig. 7, etc., is similar to the one described above, except for the position of the fixed hook member 22, and therefore is not described again.

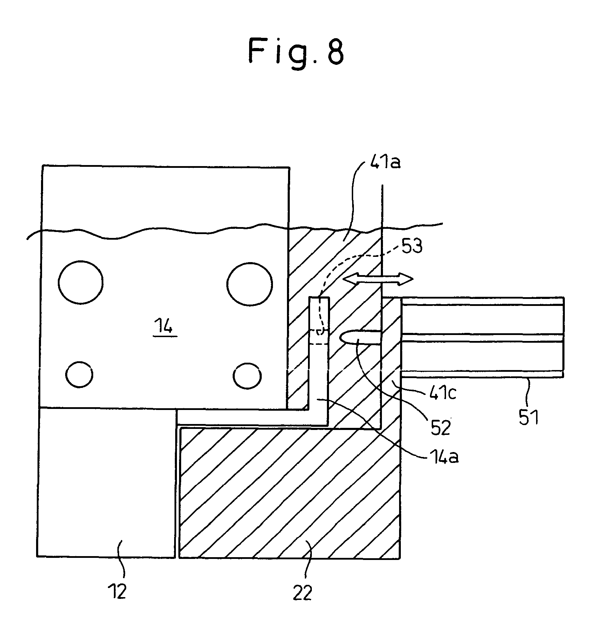

Fig. 8 is a partial side view of the holding unit shown in Fig. 7. A bracket 41c extending at right angles to the inner surface of the extension 41a is arranged at the edge of the extension 41a of the body base 41. As shown in Fig. 8, a second cylinder 51 is mounted on the outer surface of the bracket 41c. By applying the air or oil pressure to the second cylinder 51, the second rod 52 is advanced toward the movable block 14 or retreated from the movable block 14.

Another bracket 14a extending parallel to the movable block 14 is mounted on the movable block 14 in slightly spaced relation with the side surface of the movable block 14. As shown in Fig. 8, the bracket 14a is formed with a hole 53. With the projection of the second rod 52 of the second cylinder 51, the second rod 52 extends to the side surface of the movable block 14 through the hole 53. As a result, the second movable hook member 12 can be fixed on the body base 41. Thus, the second cylinder 51, the second rod 52 and the hole 53 function as second fixing means for fixing the second movable hook member 12 on the body base 41.

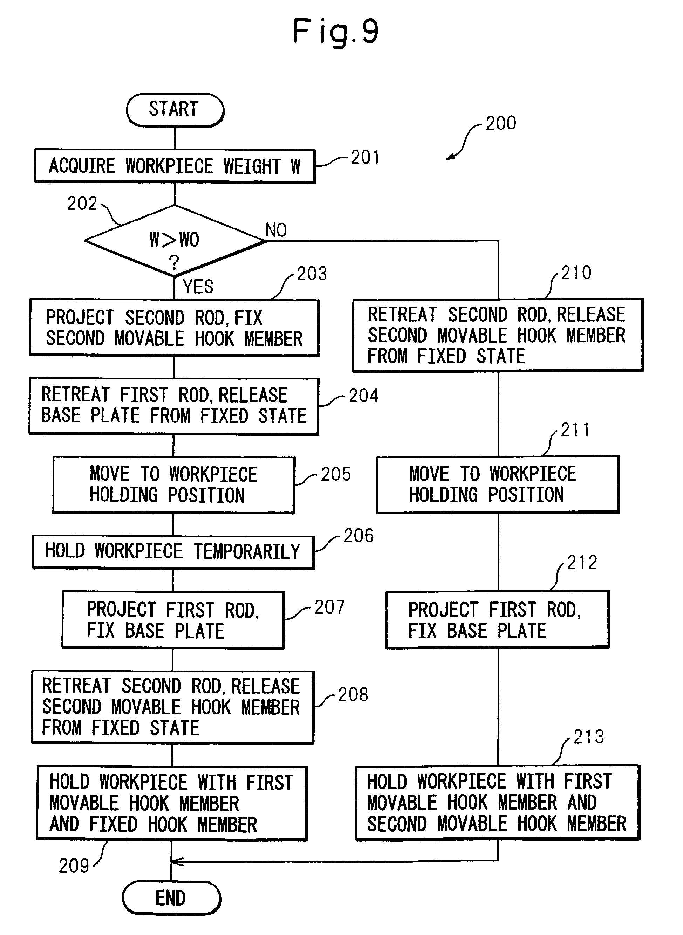

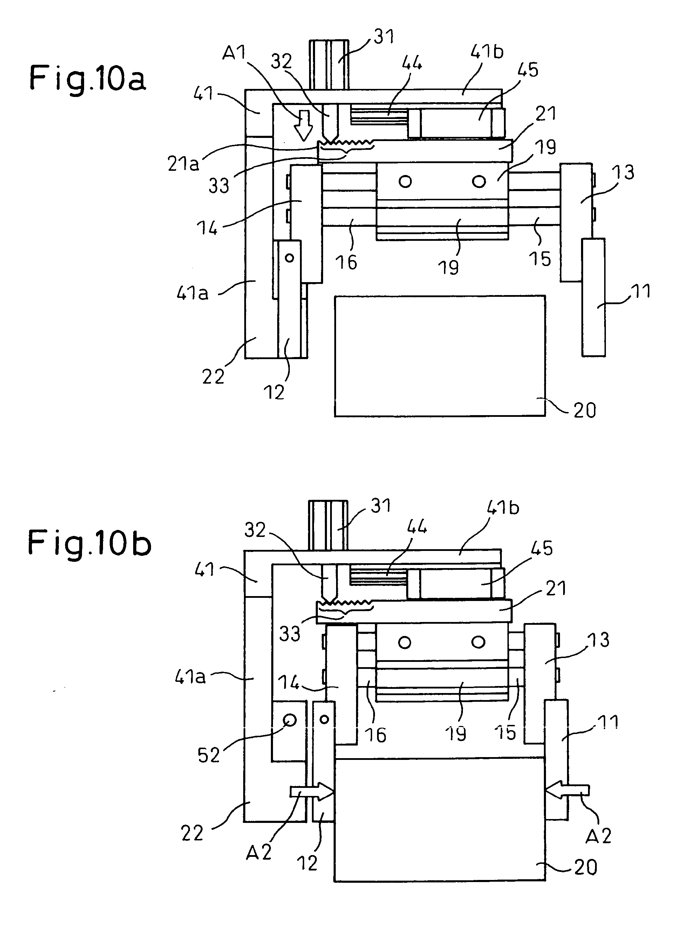

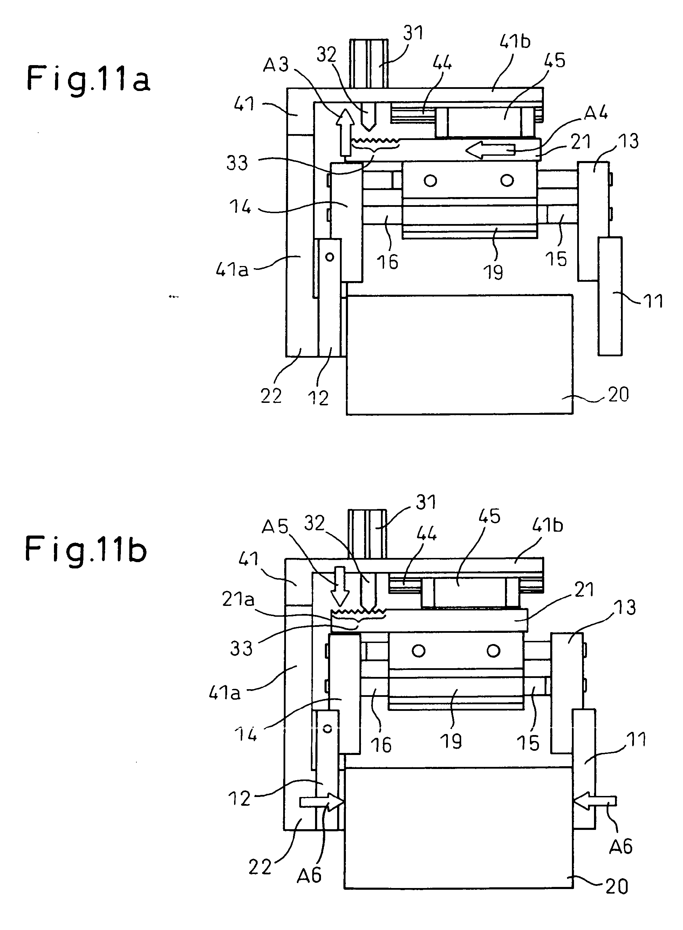

Fig. 9 is a flowchart showing the operation of the holding unit according to the invention. The operation program 200 shown in Fig. 9 is stored in the storage unit 6b of the holding apparatus control unit 6. Further, Figs. 10a, 10b, 11a and 11b are rear views of the holding unit.

With reference to Figs. 9 to 11b, the operation of the holding unit 40 according to this invention is explained. However, steps 201, 202 of the operation program 200, are identical with steps 101, 102, respectively, of the operation program 100 shown in Fig. 4 and therefore not explained again.

Upon judgment that the weight W is not larger than the threshold value W0, the process proceeds to step 210. In step 210, the second cylinder 51 is driven to project the second rod 52 thereby to retreat the second rod 52 from the hole 53. As a result, the second movable hook member 12 is released from the fixed state. Then, in step 211, the holding unit 40 itself is moved to a predetermined workpiece holding position by the robot 1. Whenever required, the slider 45 can be slid on the body base 41 to the desired position.

After that, as indicated by arrow A1 in Fig. 10a, the first cylinder 31 is driven to project the first rod 32, so that the first rod 32 engages one of the engaging grooves 33 on the base plate 21 (step 212). As a result, the base plate 21 of the holding apparatus 4 is fixed on the body base 41 in that position. Then, as indicated by arrow A2 in Fig. 10b, the drive cylinder 19 is driven to retreat the rods 15, 16 at the same time. Thus, the workpiece 20 comes to be held by the first movable hook member 11 and the second movable hook member 12 (step 213) .

On the contrary, in the case where the weight W is judged as larger than the threshold value W0, the process proceeds to step 203. In step 203, the second cylinder 51 is driven to project the second rod 52, so that the second rod 52 is inserted into the hole 53. As a result, the second movable hook member 12 is fixed on the body base 41.

Then, in step 204, as indicated by arrow A3 in Fig. 11a, the first cylinder 31 is driven to retreat the first rod 32, so that the base plate 21 of the holding apparatus 4 is released from the fixed state. Then, in step 205, as indicated by arrow A4, the slider 45 is rendered to slide with respect to the body base 41 and the holding apparatus 4 of the holding unit 40 is moved to a predetermined workpiece holding position. In the process, the holding unit 40 may be moved to the desired position using the arm 2 of the robot 1.

Then, in step 206, the workpiece 20 is temporarily held by the first movable hook member 11 and the fixed hook member 22. After that, in step 207, as indicated by arrow A5 in Fig. 11b, the first rod 32 is projected, so that the first rod 32 engages one of the engaging grooves 33 of the base plate 21. As a result, the base plate 21 of the holding apparatus 4 is fixed on the body base 41.

Then, in step 208, the second rod 52 is retreated into the second cylinder 51 thereby to release the second movable hook member 12 from the fixed state. After that, as indicated by arrow A6 in Fig. 11b, the drive cylinder 19 is driven to retreat the rods 15, 16 at the same time. As a result, the workpiece 20 is held by the first movable hook member 11 and the fixed hook member 22 (step 209).

As of this time the base plate 21 is fixed, and therefore, even if the second movable hook member 12 is released from the fixed state, the second movable hook member 12 is kept out of contact with the workpiece 20. Therefore, as explained with reference to Fig. 6, even in the case where the workpiece 20 is held by the first movable hook member 11 and the fixed hook member 22 of the holding unit 40, the holding power P2 about twice as large as the holding power P1 with which the workpiece is held by the first movable hook member 11 and the second movable hook member 12 can be obtained.

Furthermore, in the holding unit 40 according to this invention, the base plate 21 is slid with respect to the body base 41 as described above. In Fig. 10a, the base plate 21 is fixed on the body base 41 at a position in the neighborhood of the end portion 21a. Furthermore, in Fig. 11b, the base plate 21 is fixed at a position somewhat inward of the end portion 21a. Comparison of these drawings shows that the holding unit 40 according to this invention can hold a larger workpiece 20 than a workpiece held by the holding apparatus 4 by sliding the base plate 21 toward the end portion 21a thereof.

Incidentally, according to the embodiments described above with reference to the drawings, the rods are moved under the air or oil pressure imparted by the cylinder. As an alternative, the rods may be moved using a servo motor. Furthermore, any other fixing member capable of fixing the base plate 21 and the second movable hook member 12 on the body base 41 can be used as the first fixing means and the second fixing means, respectively, without departing from the scope of the invention.

In the first aspect, in the case where a comparatively small holding power is sufficient, the workpiece is held by the first movable holding member and the second movable holding member, while in the case where a comparatively large holding power is required, the workpiece is held by the first movable holding member and the fixed holding member. In any case, a common drive means is sufficient, and therefore, neither plural hydraulic chambers nor plural switching mechanisms are required. As a result, the holding power can be easily increased without a large space.

In the second aspect, the holding apparatus can be moved to various positions to hold the workpiece, and therefore, can be used effectively.

In the third aspect, the first holding member portion and the second holding member portion of a sufficiently large size to hold the workpiece can be secured by increasing the size of the first movable holding member as compared with the second movable holding member and the fixed holding member.

In the fourth aspect, the second movable holding member can be prevented from interfering with the workpiece when holding the workpiece with the first movable holding member and the fixed holding member.

In the fifth aspect, in the case where a comparatively small holding power is sufficient, the workpiece is held by the first movable holding member and the second movable holding member, while in the case where a comparatively large holding power is required, the workpiece is held by the first movable holding member and the fixed holding member. In any case, a common drive means is sufficient, and therefore, neither plural hydraulic chambers nor plural switching mechanisms are required. As a result, the holding power can be easily increased without large space. Further, a still larger workpiece can be held by sliding the base plate having the holding apparatus with respect to the body base.

In the sixth aspect, the workpiece can be held by moving the holding unit to various places, and therefore, the holding unit can be effectively used.

Typical embodiments of the invention are explained above, and it will be understood to those skilled in the art that the change described above and other various changes, modifications, omissions and additions can be made without departing from the scope of the invention.

## Claims

1. A holding apparatus comprising:
a base plate (21);
a fixed holding member (22) fixed on said base plate (21);
a first movable holding member (11) arranged in opposed relation to said fixed holding member (22) and adapted to operate in collaboration with said fixed holding member (22);
a second movable holding member (12) adapted to operate in collaboration with said first movable holding member (11) in operatively interlocked relation therewith; and
a drive means (19) for driving said first movable holding member (11) and said second movable holding member (12) in operatively interlocked relation with each other,
wherein both said second movable holding member (12) and said fixed holding member (22) face one side of said first movable holding member (11).

2. The holding apparatus according to claim 1,
wherein said holding apparatus is mounted on the arm (2) of a robot (1).

3. The holding apparatus according to claim 1 or 2,
wherein said fixed holding member (22) is arranged at a position not interfering with said second movable holding member (12), and
wherein said first movable holding member (11) includes a first holding member portion (11a) operated in collaboration with said fixed holding member (22) and a second holding member portion (11b) operated in collaboration with said second movable holding member (12).

4. The holding apparatus according to claim 1 or 2, further comprising:
a removing means (24, 25, 26) for removing said second movable holding member (12) from between said first movable holding member (11) and said fixed holding member (22) when holding said workpiece with said first movable holding member (11) and said second movable holding member (12).

5. A holding unit comprising:
a body base (41) having a fixed holding member (22), a slider (25) arranged slidably with respect to said body base (41), and a holding apparatus (4') mounted on said slider (25);
wherein said holding apparatus (4') includes a base plate (21), a first movable holding member (11) arranged in opposed relation to said fixed holding member (22) and adapted to operate in collaboration with said fixed holding member (22), a second movable holding member (12) adapted to operate in collaboration with said first movable holding member (11) in operatively interlocked relation therewith, and a drive means (19) for driving said first movable holding member (11) and said second movable holding member (12) in operatively interlocked relation with each other, and
wherein both said second movable holding member (12) and said fixed holding member (22) face one side of said first movable holding member (11);
said holding unit further comprising first fixing means (31, 32, 33) for fixing said base plate (21) on said body base (41) and second fixing means (51, 52, 53) for fixing said second movable holding member (12) on said body base (41).

6. The holding unit according to claim 5,
wherein said holding apparatus (4') is mounted on the arm (2) of a robot (1),
wherein a robot control unit (5) for controlling said robot (1) controls said drive means (19), said first fixing means (31, 32, 33) and said second fixing means (51, 52, 53).
